# EUROPÄISCHE PATENTSCHRIFT

(11) **EP 2 144 543 B1**
(45) Veröffentlichungstag und Bekanntmachung des Hinweises auf die Patenterteilung: **24.11.2010**
(21) Anmeldenummer: 08736419.6
(22) Anmeldetag: 21.04.2008
(51) Int. Cl.: A47J 31/36

(54) **BRÜHEINHEIT FÜR EINE KAFFEEMASCHINE SOWIE KAFFEEMASCHINE MIT EINER SOLCHEN BRÜHEINHEIT**
BREWING UNIT FOR A COFFEE MACHINE AND COFFEE MACHINE COMPRISING SUCH A BREWING UNIT
UNITÉ D'INFUSION POUR UNE MACHINE À CAFÉ ET MACHINE À CAFÉ COMPRENANT UNE TELLE UNITÉ D'INFUSION

(30) Priorität: 21.04.2007 DE 202007005791 U
(43) Veröffentlichungstag der Anmeldung: 20.01.2010
(73) Patentinhaber: Eurasian Trading Co. Ltd., Grand Cayman KY 1-104 (KY)
(72) Erfinder: BUDWEG, Rüdiger, 44627 Herne (DE)
(74) Vertreter: Haverkamp, Jens
(86) Internationale Anmeldenummer: PCT/EP2008/054803
(87) Internationale Veröffentlichungsnummer: WO 2008/129033

(56) Entgegenhaltungen:
- EP-A- 0 486 435
- EP-A- 1 532 903
- WO-A-02/09563

## Beschreibung

Die Erfindung betrifft eine Brüheinheit für eine Kaffeemaschine, umfassend einen Brühzylinder mit zwei Kolben, wobei der Brühzylinder gegenüber den Kolben zum Ausbilden einer Brühkammer innerhalb des Brühzylinders durch einen Spindelantrieb mit einer Spindel und mit einem das Gewinde der Spindel kämmenden Abtriebselement bewegbar ist, wobei der durch das Abtriebselement bewegbare Brühzylinder über Stellstangen mit dem Abtriebselement zum Bewegen desselben in längsaxialer Richtung der Spindel gegenüber einem Rahmen kinematisch verbunden ist. Ferner betrifft die Erfindung eine Kaffeemaschine mit einer solchen Brüheinheit.

Kaffeemaschinen, mit denen portionsweise, etwa tassenweise frisch gebrühter Kaffee bereitet werden kann, verfügen über eine Brüheinheit. Diese umfasst einen Brühzylinder, in den nach dem Starten eines Brühzyklus gemahlenes Kaffeepulver eingebracht, darin verdichtet und anschließend Heißwasser durchgeführt wird, bevor das ausgelaugte Kaffeemehl aus dem Brühzylinder ausgestoßen wird. Das in den Brühzylinder eingebrachte Kaffeepulver wird typischerweise in einem der Kaffeemaschine zugeordneten Mahlwerk aus Kaffeebohnen frisch gemahlen. Je nach Konzeption der Brüheinheit verfügt diese über zumindest zwei bewegliche Elemente, wobei es sich bei diesen um zwei gegeneinander bewegbare Kolben oder um einen Kolben und den Brühzylinder handeln kann. Es sind auch Brüheinheiten bekannt geworden, bei denen sowohl die beiden Kolben, als auch der Brühzylinder gegeneinander bewegbar sind.

Aus WO 02/09563 A1 und EP 0 659 377 B1 sind Brüheinheiten bekannt geworden, bei denen mittels eines Spindelantriebs der Brühzylinder angetrieben wird. An die Bewegung des Brühzylinders ist die Bewegung eines der beiden Kolben gekoppelt, während der andere Kolben feststehend ist. Der in diesen Dokumenten beschriebene Spindelantrieb umfasst eine elektromotorisch angetriebene Gewindespindel, auf der ein bezüglich der Drehbewegung der Gewindespindel drehentkoppeltes Abtriebselement sitzt, das sodann in Abhängigkeit von der Drehrichtung der Spindel in axialer Richtung der Spindel in die eine oder die andere Richtung bewegt wird. An das Abtriebselement wiederum angeschlossen ist der Brühzylinder. Bei der in WO 02/09563 A1 beschriebenen Brüheinheit ist das Abtriebselement in axialer Richtung von dem Brühzylinder beabstandet und mit diesem über Stellstangen verbunden. Bei der aus EP 0 659 377 B1 bekannten Brüheinheit ist der Brühzylinder an das Abtriebselement angeformt. Bei diesen Kaffeemaschinen sind die als Antriebsaggregate zum Antreiben der Spindel eingesetzten Elektromotoren Teil der Kaffeemaschine. Damit die aus EP 0 659 377 B1 bekannte Brüheinheit aus der Kaffeemaschine heraus genommen werden kann, verfügt die Spindel über einen Kupplungszapfen, der drehmomentschlüssig in ein kaffeemaschinenseitiges Antriebselement eingreift, wenn die Brüheinheit in die Kaffeemaschine eingesetzt ist. Um die Synchronisierung zwischen der kaffeemaschinenseitigen Steuerung und der Stellung der beweglichen Elemente der Brüheinheit nicht zu verändern, darf die Antriebsspindel bei aus der Kaffeemaschine heraus genommener Brüheinheit nicht gedreht werden. Zum bestimmungsgemäßen Reinigen derselben lässt sich dieses jedoch nicht immer vermeiden.

Diesem Nachteil begegnet die aus WO 02/09563 A1 bekannt gewordene Brüheinheit dadurch, dass die Stellstangen eine Schnittstelle aufweist, so dass aus der Kaffeemaschine der Brühzylinder nebst der von diesem bewegte Kolben sowie der Kaffeeauslauf heraus genommen werden können. Das Vorsehen einer solchen Schnittstelle innerhalb der Stellstangen ist jedoch aufwändig.

Neben den genannten Nachteilen der vorstehend diskutierten Brüheinheit benötigen diese eine nicht unbeträchtliche Einbautiefe, was insbesondere dann von Bedeutung ist, wenn eine solche Brüheinheit in Richtung der Tiefe einer Kaffeemaschine horizontal ausgerichtet angeordnet ist und insbesondere in dieser Richtung in die Kaffeemaschine eingesetzt bzw. aus dieser heraus genommen werden soll.

Aus EP 1 532 903 A1 ist eine Brüheinheit bekannt geworden, die gegenüber den vorbeschriebenen Brüheinheiten eine andere Konzeption aufweist. Bei dieser sind zwischen zwei Haltern Führungsstangen angeordnet, die zur Führung des Abtriebselementes dienen. Eine kinematische Kopplung zwischen dem Brühzylinder unter Zwischenschaltung von Stellstangen oder einem Lenker mit einem Abtriebselement ist bei dieser Brüheinheit nicht vorgesehen. Die in diesem Dokumente beschriebene Brüheinheit verfügt über einen mit dieser eine bauliche Einheit bildenden Elektromotor in einer radialen Anordnung zur Drehachse der Spindel, sodass die Brüheinheit zusammen mit ihrem Elektromotor als Gesamteinheit in eine Kaffeemaschine eingesetzt und umgekehrt aus dieser herausgenommen werden kann.

Ausgehend von der in WO 02/09563 A1 beschriebenen Brüheinheit liegt der Erfindung daher die Aufgabe zugrunde, eine eingangs genannte Brüheinheit dergestalt weiterzubilden, dass die zu den vorstehend diskutierten Brüheinheiten aufgezeigten Nachteile zumindest weitestgehend vermieden sind.

Diese Aufgabe wird erfindungsgemäß durch eine Brüheinheit der eingangs genannten, gattungsgemäßen Art gelöst, bei der die Brüheinheit über einen mit dieser eine bauliche Einheit bildenden Elektromotor in einer radialen Anordnung zu der Drehachse der Spindel verfügt, so dass die Brüheinheit zusammen mit ihrem Elektromotor als Gesamtheit in eine Kaffeemaschine eingesetzt und umgekehrt aus dieser herausgenommen werden kann, und dass das Abtriebselement zur Drehentkopplung gegenüber der Spindel über zumindest einen Lagerfortsatz verfügt, der in eine der Längsachse der Brüheinheit folgende rahmenseitige Führungsnut eingreift.

Im Unterschied zu früheren Konzeptionen ist bei dieser Brüheinheit der als Antriebsaggregat dienende Elektromotor integraler Bestandteil der Brüheinheit. Bei dieser Brüheinheit handelt es sich somit um ein Komplettmodul, welches als Ganzes in eine Kaffeemaschine einsetzbar und auch aus dieser herausnehmbar ist. Von Vorteil ist, dass bei dieser Ausgestaltung der Elektromotor in einer radialen Anordnung zu der eigentlichen Brüheinheit angeordnet werden kann und dieser daher nicht zur Tiefe des benötigten Bauraumes dieses Moduls beiträgt. Eine Kraftübertragung von der Antriebswelle des Elektromotors auf die Spindel kann über Ritzel, eine Kette oder einen Riemen, beispielsweise einen Zahnriemen erfolgen, also mit einer Kraftübertragung, deren Elemente in der Längserstreckung der Brüheinheit und somit in der Tiefe einer Kaffeemaschine, sollte die Brüheinheit in horizontaler Richtung von vorne nach hinten in die Kaffeemaschine einsetzbar und in umgekehrter Richtung aus dieser herausnehmbar sein, nur sehr wenig Raum benötigen. Diese für die Kraftübertragung vorgesehenen Elemente sind zweckmäßigerweise in einem Antriebskasten eingeschlossen.

Das Vorsehen des Elektromotors als Teil der Brüheinheit hat auch bei unter Umständen vorzunehmenden Wartungsmaßnahmen Vorteile. Durch entsprechendes Bestromen des Elektromotors kann ein Brühzyklus ohne weiteres und vor allem auch ohne Kraftanstrengung durchlaufen werden, selbst wenn die Brüheinheit nicht innerhalb der Kaffeemaschine angeordnet ist.

Gemäß einer bevorzugten Ausgestaltung ist der auslaufseitige Kolben in längsaxialer Richtung durch den Brühzylinder bewegbar, während der andere Kolben feststehend ist. Der der Spindel nähere, feststehende Kolben befindet sich bei in die Kaffeemaschine eingesetzter Brüheinheit tiefer innerhalb der Kaffeemaschine als der andere Kolben mit seiner Kaffeeauslaufleitung. Dieses ist zweckmäßig hinsichtlich einer Heißwasserzuführung, an die der feststehende Kolben angeschlossen, da diesbezüglich grundsätzlich keine beweglichen Elemente benötigt werden. Auch eine Heißwasserzuführung aus radialer Richtung an den feststehenden Kolben ist möglich.

Gemäß einer weiterhin bevorzugten Ausgestaltung umfasst das Abtriebselement eine Gewindehülse, die mit ihrem Gewinde das Gewinde der Gewindespindel kämmt. Die Gewindehülse ist in dem Abtriebselement in längsaxialer Richtung gegen die Kraft eines Federelements um einen gewissen Betrag gegenüber dem Abtriebselement verschiebbar gelagert.

Bei dieser Brüheinheit ist das Dämpfungselement zum Dämpfen einer gegen einen Anschlag fahrenden Bewegung des beweglichen Elementes Teil des auf der Spindel sitzenden Abtriebselements. Das Dämpfungselement umfasst ein Federelement, dessen Federkraft maßgeblich für die bereitstellbare Dämpfungskraft ist. Typischerweise wird man ein Federelement einsetzen, vorzugsweise eine Schraubendruckfeder, dessen maximale Federkraft, ohne das diese auf Block gefahren ist, größer ist als die durch den Spindelantrieb auf das Abtriebselement maximal einwirkende Kraft. Das Anordnen des Dämpfungselementes als Teil des Abtriebselements, vorzugsweise innerhalb derselben, bietet die Möglichkeit, das Dämpfungselement auszugestalten, damit dieses in beide Richtungen wirkend arbeitet. Folglich dient bei einer solchen Ausgestaltung das eine Dämpfungselement sowohl zum Dämpfen eines Anschlagens in der einen Endstellung des bewegten Elements, etwa des Brühzylinders sowie in der anderen Endstellung. Auch durch diese Maßnahme lässt sich die Länge einer solchen Brüheinheit reduzieren.

Gemäß einer bevorzugten Weiterbildung dieser Ausgestaltung ist vorgesehen, dass zur Ausbildung des Dämpfungselements auf der äußeren Mantelfläche der Gewindehülse zwei Stellringe in längsaxialer Richtung der Gewindehülse verschiebbar angeordnet sind. Diese Stellringe tragen jeweils einen radial abragenden Flansch. An den beiden Flanschen der Stellringe stützt sich eine als Federelement eingesetzte Schraubendruckfeder ab. Durch die Schraubendruckfeder werden die beiden Stellringe somit voneinander weggedrückt. Da die Flansche innerhalb einer Kammer des Abtriebselements angeordnet sind, ist der maximale Abstand der Stellringe voneinander durch Anschlagen der Flansche an einer Kammerwandung begrenzt. Die Gewindehülse verfügt im Bereich ihrer beiden Enden oder unmittelbar an einem Ende in radialer Richtung nach außen abragende Anschlagfortsätze. Diese dienen zum Anschlagen bzw. Angrenzen an der Stirnseite jeweils eines Stellringes. Vorzugsweise liegen die Stellringe an den diesbezüglichen Anschlagfortsätzen der Gewindehülsen in der Neutralstellung des Dämpfungselementes an. Die beiden Stellringe sind voneinander beabstandet, so dass in Abhängigkeit von der Richtung der relativen längsaxialen Bewegung der Gewindehülse gegenüber dem Abtriebselement gegen die Kraft des Federelements der eine oder der andere Stellring verschoben wird. Durch diese Maßnahme ist auf kleinem Raum ein in beiden Richtungen wirkendes Dämpfungsglied realisiert. Das vorstehend beschriebene Abtriebselement mit seinem Dämpfungsglied kann auch bei herkömmlichen Brüheinheiten eingesetzt werden, die über einen Spindelantrieb verfügen, jedoch keinen Elektromotor als integralen Bestandteil der Brüheinheit aufweisen.

Nachfolgend ist die Erfindung anhand eines Ausführungsbeispiels unter Bezugnahme auf die beigefügten Figuren beschrieben. Es zeigen:
- **Fig. 1:**: eine schematisierte Längsschnittdarstellung einer Brühein- heit für eine Kaffeemaschine umfassend einen Spindelan- trieb,
- **Fig. 2:**: eine perspektivische Ansicht der Brüheinheit der Figur 1,
- **Fig. 3:**: eine Querschnittdarstellung der Brüheinheit der Figur 1 ent- lang der Linie A - B,
- **Fig. 4:**: eine vergrößerte Darstellung eines Ausschnitts des Spindelantriebs der Brüheinheit der Figur 1 in neutraler Stel- lung seines Dämpfungselementes,
- **Fig. 5:**: der in Figur 2 gezeigte Ausschnitt des Spindelantriebes in einer Stellung, bei der der durch den Spindelantrieb bewegte Brühzylinder gegen einen ersten Anschlag gefahren ist und
- **Fig. 6:**: der in Figur 2 gezeigte Ausschnitt des Spindelantriebes in einer Stellung, bei der der durch den Spindelantrieb bewegte Brühzylinder gegen seinen gegenüberliegenden Anschlag gefahren ist.

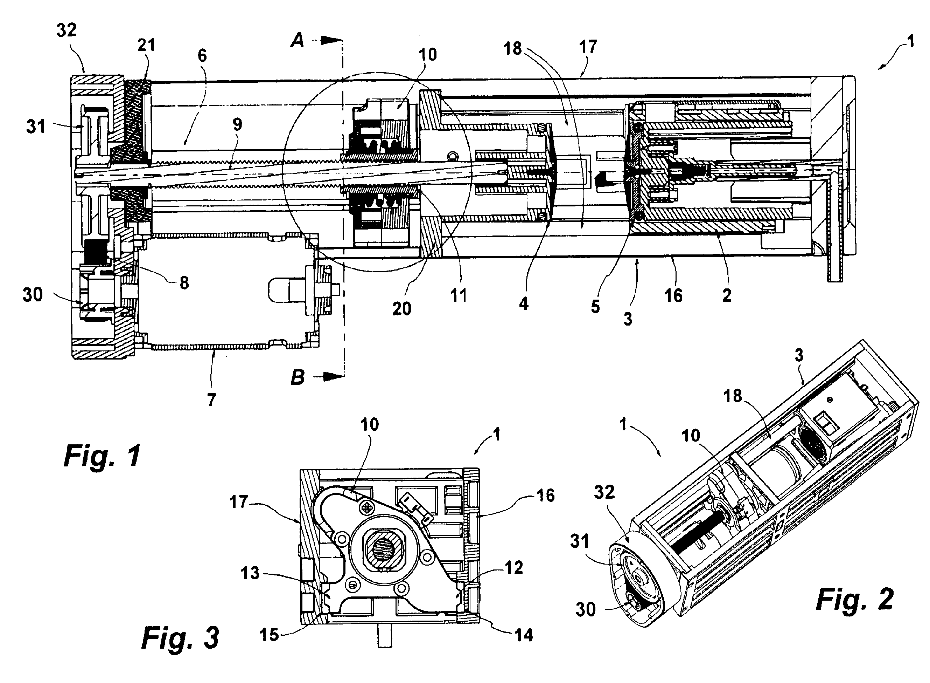

Eine im Übrigen nicht näher dargestellte Kaffeemaschine verfügt über eine Brüheinheit 1. Die Brüheinheit 1 des in den Figuren dargestellten Ausführungsbeispiels umfasst einen Brühzylinder 2, der gegenüber einem Rahmen 3 in längsaxialer Richtung, bewegbar ist. Zum Brühen eines Kaffees dient ein als Brühkammer zu bezeichnender Abschnitt des Brühzylinders 2. In Abhängigkeit von dem Durchlaufen der unterschiedlichen Phasen eines Brühzyklus wird der Brühzylinder 2 bewegt. Der Brühzylinder 2 wird gegenüber zwei Kolben 4, 5 bewegt, die, wenn diese in den Brühzylinder 2 eingreifen abgedichtet innerhalb des Brühzylinders 2 bewegt werden oder auch aus diesen, wie in Figur 1 gezeigt, heraustreten.

Angetrieben ist der Brühzylinder 2 durch einen insgesamt mit dem Bezugszeichen 6 gekennzeichneten Spindelantrieb. Der Spindelantrieb 6 umfasst einen Elektromotor 7, der mittels eines Zahnriemens 8 eine Gewindespindel 9 antreibt. In Abhängigkeit von der Drehrichtung des Elektromotors wird die Spindel 9 in die eine oder andere Richtung rotatorisch bewegt. Auf der Spindel 9 sitzt ein Abtriebselement 10 mit einer Gewindehülse 11 als Abtriebsmutter. Das Abtriebselement 10 ist gegenüber der Drehbewegung der Spindel 9 drehentkoppelt. Zu diesem Zweck verfügt das Abtriebselement 10 über Lagerfortsätze 12, 13, von denen jeweils einer in eine der Längsachse der Brüheinheit 1 folgende Führungsnuten 14, 15 jeweils eines Seitenteils 16 beziehungsweise 17 des Rahmens 3 eingreift (vgl. Figur 3). Die vorbeschriebene drehentkoppelte Lagerung des Abtriebselementes 10 hat zum Vorteil, dass, wenn sich das Abtriebselement 10 im Bereich seiner anderen als in Figur 1 gezeigten Endstellung auf der Spindel 9 befindet, auf die Stellstangen 18 kein Drehmoment ausgeübt wird, diese mithin lediglich einer Schub- und Zugbeanspruchung zum Bewegen des Brühzylinders 2 genügen müssen.

An das Abtriebselement 10 sind einander bezüglich der Spindel 9 einander diametral gegenüberliegend zwei Stellstangen 18 angeschlossen. Die Stellstangen sind mit ihrem anderen Ende an dem Brühzylinder 2 schub- und zugfest befestigt. Bei einer rotatorischen Drehbewegung der Spindel 9 wird infolge der vorbeschriebenen Drehentkopplung das Abtriebselement 10 in Abhängigkeit von der Drehrichtung der Spindel 9 in längsaxialer Richtung bewegt. Mit dem Abtriebselement 10 wird der Brühzylinder 2 infolge seiner Anbindung über die Stellstangen 18 mitbewegt, um in der seine unterschiedlichen Stellungen beim Durchlaufen eines Brühzyklus gebracht zu werden. Die Stellstangen 18 durchgreifen ein die beiden Seitenteile 16, 17 verbindendes Rahmenteil 20. Durch die unmittelbare Drehentkopplung des Abtriebselementes 10 mittels seiner in die Führungsnuten 14, 15 eingreifenden Lagerfortsätze 12 bzw. 13 können die Stellstangen 18 das Rahmenteil 20 mit Spiel durchgreifen, so dass Reibungsverluste entweder vermieden oder auf ein Minimum reduziert sind.

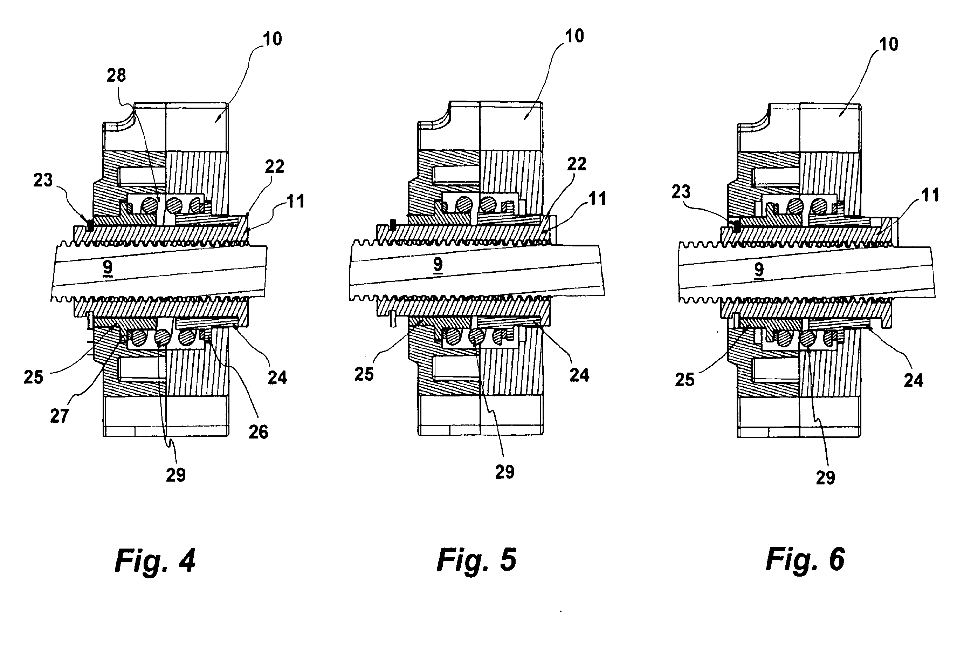

Bei dem dargestellten Ausführungsbeispiel ist der Verstellbetrag des Brühzylinders 2 und die Länge der Spindel 9 aufeinander zur Reduzierung der Einbautiefe der Brüheinheit 1 abgestimmt. Bei einem Betrieb der Brüheinheit 1 wird im Zuge eines Brühzyklusses das Abtriebselement 10 aus seiner in Figur 1 gezeigten einen Endstellung über die gesamte Längserstreckung der Spindel 9 bis an die dem Rahmenteil 20 gegenüberliegende Rückwand 21 des Rahmens 3 bewegt. Die Bewegung des Abtriebselementes in längsaxialer Richtung wird bei dem dargestellten Ausführungsbeispiel durch auf den von dem Abtriebselement 10 bewegten Brühzylinder 2 wirkende Anschläge definiert. Damit das Auf-Anschlag-Fahren des Brühzylinders 2 gedämpft erfolgt, verfügt das Abtriebselement 10 über eine Dämpfungseinrichtung. Diese ist nachfolgend unter Bezugnahme auf die das Abtriebselement 10 vergrößert darstellende Figuren 4 bis 6 beschrieben.

Die Gewindehülse 11 ist in dem Abtriebselement 10 in längsaxialer Richtung gegenüber den anderen Bestandteilen des Abtriebselements 10 verstellbar. Die Gewindehülse 11 weist an ihrem einen Ende einen in radialer Richtung nach außen abragenden Anschlagfortsatz 22 auf. Im Bereich des gegenüberliegenden Endes der Gewindehülse 11 wird ein weiterer Anschlagfortsatz 23 durch einen auf die Gewindehülse 11 aufgesetzten Sprengring gebildet. Auf der äußeren Mantelfläche der Gewindehülse 11 sind zwei Stellringe 24, 25 in längsaxialer Richtung gegenüber der Gewindehülse 11 verstellbar angeordnet. Diese ragen mit einem in radialer Richtung nach außen gerichteten Flansch 26, 27 in eine Kammer 28 des Abtriebselements 10. Zwischen den Flanschen 26, 27 der Stellringe 24, 25 ist eine Schraubendruckfeder 29 angeordnet. Diese stützt sich an den Flanschen 26, 27 ab und steht in dieser in der Figur 4 gezeigten Neutralstellung unter Vorspannung. Mithin werden die Flansche 26, 27 der beiden Stellringe 24, 25 durch die Schraubendruckfeder 29 an die die Kammer 28 in axialer Richtung begrenzenden Wände der Kammer 28 gedrückt.

Die Gewindehülse 11 ragt auf beiden Flachseiten des Abtriebselements 10 aus dem zentralen Kanal des Abtriebselementes 10 zur Aufnahme der Gewindehülse 11 und der Stellringe 24, 25 heraus. Diese Elemente bilden zusammen mit der Schraubendruckfeder 29 das Dämpfungselement innerhalb des Abtriebselementes 10 aus.

Bei einem rotatorischen Antrieb der Spindel 9 in die eine Richtung wandert das auf der Spindel 9 sitzende Abtriebselement 10 entsprechend in längsaxialer Richtung, wodurch in Folge der daran angeschlossenen Stellstangen 18 ebenfalls der Brühzylinder 2 gleichermaßen mitbewegt wird. Läuft der Brühzylinder 2 im Zuge einer solchen Bewegung an einem Anschlag auf, wird das Anschlagen der Brühkammer 2 an dem Anschlag durch das vorbeschriebene Dämpfungselement gedämpft. Bei einer Bewegung der Spindel 9 zum Bewegen des Brühzylinders 2 aus seiner in Figur 1 gezeigten Stellung in seine andere Endstellung, in der der Brühzylinder 2 an dem Rahmenteil 20 anschlägt, wird sobald die Brühkammer 2 von der zu dieser zugewandten Seite des Rahmenteils 20 anschlägt mit dem Anschlagen der Brühkammer 2 an dem Rahmenteil 20, was eine weitere Bewegung des Brühzylinders 2 in dieser Richtung stoppt, die Gewindehülse 11 gegen die Kraft der Schraubendruckfeder 29 in der ursprünglichen Bewegungsrichtung des Abtriebselementes 10 durch die anhaltende Rotation der Spindel 9 in dieser Richtung weiter bewegt, wie dieses aus Figur 5, in dem eine solche Situation dargestellt ist, erkennbar ist. Der Stellring 24 ist in Folge dieser Bewegung auf den Stellring 25 zubewegt worden. Da die durch die Schraubendruckfeder 29 bereit gestellte Kraft größer ist als die maximale, durch den Antriebsmotor 7 bereit gestellte Kraft zum Bewegen des Abtriebselementes 10, ist ein vollständiges Auf-Anschlag-Fahren der beiden Stellringe 24, 25 vermieden. Der Antriebsmotor schaltet bei einer solchen Leistungsaufnahme selbsttätig ab. Wird die Spindel 9 in entgegensetzter Drehrichtung angetrieben, wandert das Abtriebselement 10 und mit diesem der Brühzylinder 2 zurück in seine in Figur 1 gezeigte Position. Befindet sich der Brühzylinder 2 an seinem rechten Anschlag, erfolgt das Einfahren, beziehungsweise Anfahren an diesen Anschlag gleichermaßen, wie dieses in Figur 6 dargestellt ist. In dieser Stellung der Elemente des Dämpfungselementes ist durch die Gewindehülse 11 der Stellring 25 auf den Stellring 24 gegen die Kraft der Schraubendruckfeder 29 bewegt worden. Erkennbar aus den Figuren 5 und 6 ist, dass der Anschlagfortsatz 22 bzw. 23 für die jeweilige Bewegungsmitnahme des einen oder des anderen Stellringes 24 bzw. 25 verantwortlich ist.

Der Elektromotor 7 befindet sich bei dem dargestellten Ausführungsbeispiel in einer radialen Anordnung zu der Drehachse der Spindel 9 sowie der Ausrichtung des Rahmens 3. Gleiches gilt für die Antriebswelle des Elektromotors 7 mit ihrem Antriebsrad 30. Auf dem Antriebsrad 30 sitzt der Zahnriemen 8, der die Gewindespindel 9 über ein Abtriebsrad 31 antreibt. Die beiden Räder 30, 31 sowie der Zahnriemen 8 sind in einem Antriebskasten 32 eingeschlossen. Der zum Verschließen des Antriebskastens 32 vorgesehene Deckel ist in Figur 2 entfernt, um einen Einblick in den Antriebskasten 32 zu erlauben. Figur 2 zeigt, dass das die Brüheinheit 1 mit ihrem Elektromotor 7 kompakt aufgebaut ist und hinsichtlich ihrer benötigten Einbautiefe, wenn diese in horizontaler Richtung von vorne nach hinten in eine Kaffeemaschine eingesetzt werden soll, nur eine relativ geringe Tiefe benötigt.

Die Brüheinheit 1 verfügt ferner über eine Heißwasserzuführung, die bei dem dargestellten Ausführungsbeispiel in radialer Richtung dem feststehenden Kolben 4 zugeführt wird. Des Weiteren trägt der Rahmen 3 ein elektrisches Steckverbindungsteil, um die Brüheinheit 1 an die Stromversorgung einer Kaffeemaschine anschließen zu können. Beide Anschlusselemente sind in den Figuren nicht dargestellt.

### Bezugszeichenliste

- 1: Brüheinheit
- 2: Brühzylinder
- 3: Rahmen
- 4: Kolben
- 5: Kolben
- 6: Spindelantrieb
- 7: Elektromotor
- 8: Zahnriemen
- 9: Spindel
- 10: Antriebselement
- 11: Gewindehülse
- 12: Lagerfortsatz
- 13: Lagerfortsatz
- 14: Führungsnut
- 15: Führungsnut
- 16: Seitenteil
- 17: Seitenteil
- 18: Stellstange

- 20: Rahmenteil
- 21: Rückwand
- 22: Anschlagflansch
- 23: Anschlagflansch
- 24: Stellring
- 25: Stellring
- 26: Flansch
- 27: Flansch
- 28: Kammer
- 29: Schraubendruckfeder
- 30: Antriebsrad
- 31: Abtriebsrad
- 31: Antriebskasten

## Patentansprüche

1. Brüheinheit für eine Kaffeemaschine, umfassend einen Brühzylinder (2) mit zwei Kolben (4, 5), wobei der Brühzylinder (2) gegenüber den Kolben (4, 5) zum Ausbilden einer Brühkammer innerhalb des Brühzylinders (2) durch einen Spindelantrieb (6) mit einer Spindel (9) und mit einem das Gewinde der Spindel (9) kämmenden Abtriebselement (10) bewegbar ist, wobei der durch das Abtriebselement (10) bewegbare Brühzylinder (2) über Stellstangen (18) mit dem Abtriebselement (10) zum Bewegen desselben in längsaxialer Richtung der Spindel (9) gegenüber einem Rahmen (3), kinematisch verbunden ist, wobei die Brüheinheit (1) über einen mit dieser eine bauliche Einheit bildenden Elektromotor (7) in einer radialen Anordnung zu der Drehachse der Spindel (9) verfügt, so dass die Brüheinheit (1) zusammen mit ihrem Elektromotor (7) als Gesamtheit in eine Kaffeemaschine eingesetzt und umgekehrt aus dieser herausgenommen werden kann, **dadurch gekennzeichnet, dass** das Abtriebselement (10) zur Drehentkopplung gegenüber der Spindel (9) über zumindest einen Lagerfortsatz (12, 13) verfügt, der in eine der Längsachse der Brüheinheit (1) folgende rahmenseitige Führungsnut (14, 15) eingreift.

2. Brüheinheit nach Anspruch 1, **dadurch gekennzeichnet, dass** das Abtriebselement (10) über zwei Lagerfortsätze (12, 13) verfügt, von denen jeweils einer in eine der Längsachse der Brüheinheit (1) folgende Führungsnut (14, 15) eingreift.

3. Brüheinheit nach Anspruch 1 oder 2, **dadurch gekennzeichnet, dass** die Stellstangen (18) ein Rahmenteil (20) mit Spiel durchgreifen.

4. Brüheinheit nach einem der Ansprüche 1 bis 3, **dadurch gekennzeichnet, dass** die Antriebswelle des Elektromotors (7) parallel zur Drehachse der Spindel (9) angeordnet ist.

5. Brüheinheit nach einem der Ansprüche 1 bis 4, **dadurch gekennzeichnet, dass** der Elektromotor (7) die Spindel (9) mittels eines Zahnriemens (8) antreibt.

6. Brüheinheit nach Anspruch 4 oder 5, **dadurch gekennzeichnet, dass** die für die Kraftübertragung von der Antriebswelle des Elektromotors (7) auf die Spindel (9) vorgesehenen Elemente (30, 31) in einem Antriebskasten (32) eingeschlossen sind.

7. Brüheinheit nach einem der Ansprüche 1 bis 6, **dadurch gekennzeichnet, dass** die Brüheinheit (1) einen elektrischen Anschlussstecker und ein Heißwasseranschlusssteckverbindungsteil aufweist.

8. Brüheinheit nach einem der Ansprüche 1 bis 7, **dadurch gekennzeichnet, dass** das Abtriebselement (10) eine Gewindehülse (11) umfasst, die mit ihrem Gewinde das Gewinde der Spindel (9) kämmt und welche Gewindehülse (11) in dem Abtriebselement (10) in längsaxialer Richtung gegen die Kraft eines Federelements (29) um einen gewissen Betrag gegenüber dem Abtriebselement (10) verschiebbar gelagert ist.

9. Brüheinheit nach Anspruch 8, **dadurch gekennzeichnet, dass** das Federelement, gegen welches die Verstellbarkeit der Gewindehülse (11) gegenüber dem Abtriebselement in axialer Richtung möglich ist, eine die Gewindehülse umschließende Schraubendruckfeder (29) ist.

10. Brüheinheit nach Anspruch 9, **dadurch gekennzeichnet, dass** auf der äußeren Mantelfläche der Gewindehülse (11) zwei Stellenringe (24, 25) mit jeweils einem in radialer Richtung abragenden Flansch (26, 27) in längsaxialer Richtung verschiebbar gelagert sind und sich die Schraubendruckfeder (29) an beiden Flanschen (26, 27) abstützt, zwischen welchen Flanschen (26, 27) die Schraubendruckfeder (29), zweckmäßiger Weise unter Vorspannung gehalten angeordnet ist, und die Gewindehülse (11) im Bereich ihrer Enden oder an ihren Enden in radialer Richtung nach außen abragende Anschlagfortsätze (22, 23) aufweist, die bei längsaxialer Bewegung der Gewindehülse (11) gegenüber dem Abtriebselement (10), bzw. den Stellringen (22, 23) in der einen Richtung an einem Stellring (24 oder 25) und bei einer Bewegung in die entgegen gesetzte Richtung an dem anderen Stellring (25 oder 24) anschlagen.

11. Brüheinheit nach Anspruch 10, **dadurch gekennzeichnet, dass** die Stellringe (24, 25) mit ihren Flanschen (26, 27) in einer Kammer (28) des Abtriebselements (10) angeordnet sind.

12. Kaffeemaschine ausgerüstet mit einer aus dieser herausnehmbaren Brüheinheit (1), **dadurch gekennzeichnet, dass** die Brüheinheit (1) die Merkmale eines oder mehrerer der Ansprüche 1 bis 11 aufweist und daher die Brüheinheit (1) insgesamt mit dem Elektromotor (7) aus der Kaffeemaschine herausnehmbar und umgekehrt in diese einsetzbar ist.

13. Kaffeemaschine nach Anspruch 12, **dadurch gekennzeichnet, dass** die Brüheinheit (1) in horizontaler Richtung aus der Kaffeemaschine herausnehmbar und in umgekehrter Richtung in diese einsetzbar ist.

14. Kaffeemaschine nach Anspruch 12 oder 13 in dem Rückbezug auf einen der Ansprüche 8 bis 11, **dadurch gekennzeichnet, dass** die Leistung des für den Spindelantrieb (6) eingesetzten Elektromotors (7) kleiner ist als die durch die maximale Kraft des Federelementes (29) bereit gestellte Gegenkraft.

## Claims

1. Brewing unit for a coffee machine, said brewing unit comprising a brewing cylinder (2) with two pistons (4, 5), wherein, for realizing a brewing chamber within the brewing cylinder (2), the brewing cylinder (2) is moveable relative to the piston (4, 5) by means of a spindle drive (6) with a spindle (9) and with an output element (10) that engages the thread of the spindle (9), wherein the brewing cylinder (2), moveable by means of the output element (10), is connected in a kinematic manner via drive rods (18) to the output element (10) for moving the same in the longitudinal axial direction of the spindle (9) in relation to the frame (3), wherein the brewing unit (1) has an electric motor (7), forming with said brewing unit one structural unit, in a radial arrangement in relation to the axis of rotation of the spindle (9) such that the brewing unit (1) together with its electric motor (7) can be inserted into a coffee machine and in reverse can be removed from such a coffee machine as one single unit, **characterized in that** the output element (10), for the rotating decoupling in relation to the spindle (9), has at least one bearing extension (12, 13), which engages in a frame-side guide groove (14, 15) that follows the longitudinal axis of the brewing unit (1).

2. Brewing unit according to Claim 1, **characterized in that** the output element (10) has two bearing extensions (12, 13), one of which in each case engages in a guide groove (14, 15) that follows the longitudinal axis of the brewing unit (1).

3. Brewing unit according to Claim 1 or 2, **characterized in that** the drive rods (18) reach through a frame portion (20) with play.

4. Brewing unit according to one of Claims 1 to 3, **characterized in that** the drive shaft of the electric motor (7) is located parallel to the axis of rotation of the spindle (9).

5. Brewing unit according to one of Claims 1 to 4, **characterized in that** the electric motor (7) drives the spindle (9) by means of a toothed belt (8).

6. Brewing unit according to Claim 4 or 5, **characterized in that** the elements (30, 31) provided for the force transmission from the drive shaft of the electric motor (7) to the spindle (9) are enclosed in a drive gear box (32).

7. Brewing unit according to one of Claims 1 to 6, **characterized in that** the brewing unit (1) has an electric connector plug and a hot water connection plug-type connecting part.

8. Brewing unit according to one of Claims 1 to 7, **characterized in that** the output element (10) includes a threaded sleeve (11) which engages the thread of the spindle (9) by way of its thread and which threaded sleeve (11) is mounted in the output element (10) so as to be displaceable in the longitudinal axial direction by a certain amount in relation to the output element (10) against the force of a resilient element (29).

9. Brewing unit according to Claim 8, **characterized in that** the resilient element, against which the adjustability of the threaded sleeve (11) in relation to the output element is possible in the axial direction, is a helical compression spring (29) that surrounds the threaded sleeve.

10. Brewing unit according to Claim 9, **characterized in that** two adjusting rings (24, 25), each with a flange (26, 27) that protrudes in the radial direction, are mounted on the outer surface area of the threaded sleeve (11) so as to be displaceable in the longitudinal axial direction and the helical compression spring (29) is supported on both flanges (26, 27), the helical compression spring (29) being located, held in an expedient manner under preliminary tension, between said flanges (26, 27), and the threaded sleeve (11) has stop extensions (22, 23) which protrude outwards in the radial direction in the region of its ends or at its ends and which, during the longitudinal axial movement of the threaded sleeve (11) in relation to the output element (10) or the adjusting rings (22, 23) in the one direction, abut against one adjusting ring (24 or 25) and during a movement into the opposite direction abut against the other adjusting ring (25 or 24).

11. Brewing unit according to Claim 10, **characterized in that** the adjusting rings (24, 25) are located with their flanges (26, 27) in a chamber (28) of the output element (10).

12. Coffee machine provided with a brewing unit (1) that is removable from said coffee machine, **characterized in that** the brewing unit (1) has the features of one or more of Claims 1 to 11 and consequently the brewing unit (1) together with the electric motor (7) can be removed out of the coffee machine and in reverse can be inserted into said coffee machine.

13. Coffee machine according to Claim 12, **characterized in that** the brewing unit (1) can be removed out of the coffee machine in the horizontal direction and can be inserted into said coffee machine in the reverse direction.

14. Coffee machine according to Claim 12 or 13 in which there is dependency on one of Claims 8 to 11, **characterized in that** the output of the electric motor (7) used for the spindle drive (6) is smaller than the counter force supplied by the maximum force of the resilient element (29).

## Revendications

1. Unité d'infusion pour une machine à café comprenant un cylindre d'infusion (2) muni de deux pistons (4, 5), lequel cylindre d'infusion (2) étant, afin de former une chambre d'infusion à l'intérieur du cylindre d'infusion (2), déplaçable par rapport au piston (4, 5) au moyen d'un mécanisme d'entraînement à broche (6) comprenant une broche (9) et un élément d'entraînement (10) qui s'engage dans le filetage de la broche (9), lequel cylindre d'infusion (2) déplaçable grâce à l'élément d'entraînement (10) étant relié cinétiquement par des barres de réglage (18) avec l'élément d'entraînement (10) afin de déplacer ce dernier dans le sens longitudinal axial de la broche (9) par rapport à un cadre (3), l'unité d'infusion (1) disposant d'un électromoteur (7) formant avec cette dernière une unité constructive, dans une disposition radiale par rapport à l'axe de rotation de la broche (9) de telle sorte que l'unité d'infusion (1) formant une entité avec son électromoteur (1) peut être mise en place et inversement retirée de la machine à café, **caractérisée en ce que** l'élément d'entraînement (10) dispose à des fins de découplage en rotation par rapport à la broche (9) d'au moins un prolongement de palier (12, 13) qui s'engage dans une rainure de guidage (14, 15) du côté du cadre qui suit l'axe longitudinal de l'unité d'infusion (1).

2. Unité d'infusion selon la revendication 1 **caractérisée en ce que** l'élément d'entraînement (10) dispose de deux prolongements de palier (12, 13) dont respectivement un s'engage dans une rainure de guidage (14, 15) qui suit l'axe longitudinal de l'unité d'infusion (1).

3. Unité d'infusion selon la revendication 1 ou 2 **caractérisée en ce que** les barres de réglage (18) traversent avec du jeu une partie de cadre (20).

4. Unité d'infusion selon l'une des revendications 1 à 3 **caractérisée en ce que** l'arbre d'entraînement de l'électromoteur (7) est disposé parallèlement à l'axe de rotation de la broche (9).

5. Unité d'infusion selon l'une des revendications 1 à 4 **caractérisée en ce que** l'électromoteur (7) entraîne la broche (9) au moyen d'une courroie dentée (8).

6. Unité d'infusion selon la revendication 4 ou 5 **caractérisée en ce que** les éléments (30, 31) prévus pour transmettre la force de l'arbre d'entraînement de l'électromoteur (7) sur la broche (9) sont raccordés à un carter moteur (32).

7. Unité d'infusion selon l'une des revendications 1 à 6 **caractérisée en ce que** l'unité d'infusion (1) comporte une fiche de raccordement électrique et une tubulure d'emboîtement pour l'eau chaude.

8. Unité d'infusion selon l'une des revendications 1 à 7 **caractérisée en ce que** l'élément d'entraînement (10) comprend une douille filetée (11) qui s'engage par son filetage sur le filetage de la broche (9) et laquelle douille filetée (11) est logée dans l'élément d'entraînement (10) de façon à pouvoir coulisser dans une certaine proportion par rapport à l'élément d'entraînement (10), dans le sens de l'axe longitudinal, contre la force exercée par un élément ressort (29).

9. Unité d'infusion selon la revendication 8 **caractérisée en ce que** l'élément ressort permettant le réglage dans le sens axial de la douille filetée (11) par rapport à l'élément d'entraînement, est un ressort cylindrique de compression (29) englobant la douille filetée.

10. Unité d'infusion selon la revendication 9 **caractérisée en ce que** sur la surface d'enveloppe extérieure de la douille filetée (11) sont logées de manière déplaçable dans le sens de l'axe longitudinal, deux bagues de réglage (24, 25) comportant chacune une bride (26, 27) en saillie radiale et que le ressort cylindrique de compression (29) est en appui sur les deux brides (26, 27), entre lesquelles deux brides (26, 27) le ressort cylindrique de compression (29) est judicieusement maintenu en précontrainte et que la douille filetée (11) comporte à proximité de ses extrémités ou sur ses extrémités des prolongements de butée (22, 23) en saillie radiale vers l'extérieur, qui, lors d'un mouvement dans le sens axial longitudinal de la douille filetée (11) par rapport à l'élément d'entraînement (10) ou aux bagues de réglage (22, 23), se mettent en butée contre une bague de réglage (24 ou 25) lors d'un mouvement dans une direction ou contre l'autre bague de réglage (25 ou 24) lors d'un mouvement dans la direction opposée.

11. Unité d'infusion selon la revendication 10 **caractérisée en ce que** les bagues de réglage (24, 25) sont disposées par leur brides (26, 27) dans une chambre (28) de l'élément d'entraînement (10).

12. Machine à café équipée d'une unité d'infusion (1) qui peut être extraite de cette dernière **caractérisée en ce que** l'unité d'infusion (1) présente les caractéristiques d'une ou de plusieurs revendications 1 à 11 et que l'entité constituée de l'unité d'infusion (1) avec l'électromoteur (7) peut ainsi être extraite de la machine à café ou inversement être mise en place dans cette dernière.

13. Machine à café selon la revendication 12 **caractérisée en ce que** l'unité d'infusion (1) peut être extraite horizontalement de la machine à café et qu'elle peut être remise en place dans cette dernière dans le sens contraire.

14. Machine à café selon la revendication 12 ou 13, en référence à l'une des revendications 8 à 11, **caractérisée en ce que** la puissance de l'électromoteur (7) utilisée pour le mécanisme d'entraînement de la broche (6) est inférieure à la force contraire mise à disposition pour la force maximale de l'élément à ressort (29).
